# EUROPEAN PATENT APPLICATION

(11) **EP 3 524 578 A1**
(43) Date of publication of application: **14.08.2019**
(21) Application number: 16918177.3
(22) Date of filing: 10.10.2016
(51) Int. Cl.: C02F 1/48, C02F 1/28, C02F 1/32, C02F 1/72, C02F 9/12, B01J 20/20, B01J 20/30, B01J 20/28

(54) **SEWAGE TREATMENT METHOD AND SYSTEM**

(30) Priority: 07.10.2016 CN 201610874501; 07.10.2016 CN 201610874502; 07.10.2016 CN 201610874286; 07.10.2016 CN 201610874229; 07.10.2016 CN 201610876696; 07.10.2016 CN 201610876640; 07.10.2016 CN 201610876687; 07.10.2016 CN 201610874503; 07.10.2016 CN 201610874227; 07.10.2016 CN 201610874230
(71) Applicant: Yulinghua Technology Co. Ltd, Wuhan, Hubei 430000 (CN)
(72) Inventor: ZHU, Guanghua, Beijing 100080 (CN)
(74) Representative: Franke, Dirk
(86) International application number: PCT/CN2016/101620
(87) International publication number: WO 2018/064844

(57) **Abstract**

A sewage processing method and system are provided. The effects of a high gradient, strong magnetic field are used to fabricate a chain net structure of a specific specification in a specific position of a high gradient magnetic field by using a paramagnetic metal wire, thereby being able to rapidly capture a magnetic substance into a three-dimensional mesh and return a magnetic adsorbent material for reuse by means of the blowing of an air compressor, vacuum suction and a cyclone solid-gas separation system. Meanwhile, provided is a highly efficient adsorptive quantum carbon magnetic medium and a photoreaction medium having a wider range of spectral domain light sources for catalytic reaction. The photoreaction medium is a particle shape of a specific size and is naturally precipitated and separated by means of gravity, thereby achieving a continuous high-speed task system.

## Description

### TECHNICAL FIELD OF THE INVENTIION

Embodiment of the invention relates to a water processing method and system, relating to technical field of environmental protection, in particular, relates to a sewage processing method and system.

### BACKGROUND OF THE INVENTIION

Heavy metals contained in waste water are harmful to the environment and human health for a long time. A large amount of untreated waste is transferred to the soil system and collected and remains in the soil environment under the action of natural factors. Soil pollution is mainly caused by heavy metals, of which cadmium, mercury, lead and arsenic are most prominent. The heavy metal ions of (Cr), As (As), Cd(Cd), Zn (Zn), Ni (Ni) in the waste water have characteristics of difficult degradation, irreversible nature, high toxicity and easy biological accumulation, can produce great harmfully toxic effect in trace amount.

Traditional processing methods for polluted water include chemical precipitation, ion exchange, adsorption, membrane separation, redox action, electrolysis and extraction, etc. However, these methods are often affected by water temperature, pH value, water quality and other factors, with low removal rate of some soluble substances and secondary pollution. There are many technologies for remediation of soil organic substance and heavy metals, including common physical and chemical methods, phytoremediation, microbial remediation, soil washing and leaching backfilling, and so on. At present, in soil remediation engineering, a popular method is to recycle pollutants from the soil into washing water, and refill treated soil, and then perform water processing on polluted water after washing.

Application of magnetic separation technology to waste water processing, especially application of superconducting high gradient magnetic separation technology to processing of heavy metal waste water, has its unique advantages. For weak magnetic and non-magnetic pollutants in the waste water, magnetic separation processing can be carried out quickly through the adsorption method of magnetic media with various characteristics. Magnetic separation processing system has become a new research direction in recent years because of its advantages of low cost, small space requirement, high efficiency and high processing speed. Magnetic separation of heavy metal waste water consists of two aspects of works: one relates to superconducting magnet, the other relates to magnetic seed. Superconducting magnet equipment has been a very mature technology, which can be easily obtained from commercial products. A key problem of magnetic separation is how to prepare high-quality magnetic seeds and specific process of the magnetic separation.

Photocatalytic oxidation is an advanced oxidation technology, which is widely studied at present. It is an environment-friendly green water processing technology, can completely oxidize and degrade organic pollutants in waste water. In combination with a certain amount of light radiation, surface of light sensitive dielectric material is excited by light to produce electrons (e-) and hole (h+). These electrons and holes have a strong reduction and oxidation ability, and can react with water or containing oxygen to produce hydroxyl radical (·OH) and super anion (·O). These highly oxidizing free radicals can cut off and decompose almost all chemical bonds that make up organic molecules to achieve innocuous processing. However, catalyst utilization and recycle rate of photo-catalytic oxidation methods are low. It is necessary to improve efficiency of the reaction by improving the catalyst efficiency, using photogenerated electron and hole recombination, and other processing technologies.

Superconducting high gradient magnetic separation technology has become one of the most promising new waste water processing technologies because of its unique separation principle and many advantages. With continuous development of technological theory and equipment, its application fields are expanding. It has unique advantages in industrial waste water, domestic sewage, polluted river water and lake water, as well as in the processing of weak magnetic and non-magnetic pollutants in sludge and waste water. Adsorption materials using magnetic functions have been widely studied and applied on a small scale. In the same way, the photocatalytic oxidation method also has excellent characteristics. However, these two technologies have not yet received the cases of popularization and large-scale engineering applications due to the lack of highly efficient, economic, reasonable technical equipment and so on. In particular, whether the equipment magnetic separation method and the functional magnetic adsorption material can match well is related to whether the characteristics of magnetic separation technology can be brought into full play. In photocatalytic oxidation, photo-catalytic medium can produce catalytic action under irradiation by a light source with specific wavelength, therefore, whether the photo-catalytic medium can be developed with a wider range of spectral effect for catalytic reaction is also one of important topics in this field.

In view of these problems, on basis of long-term systematic development and basic material research, the inventor proposes to use function of high gradient and strong magnetic field to weave chain net structure with a special specification from paramagnetic wire, and place it in special position in high gradient magnetic field, thus magnetic material can be quickly captured to three-dimensional mesh. Further, through injection, vacuum inhalation, cyclone solid-gas separation system of an air pressure equipment, magnetic adsorption material can be recycled and reused. In addition, an embodiment of the invention uses quantum carbon magnetic medium and quantum carbon photoreaction medium as magnetic adsorption material and photoreaction medium respectively, thereby improving adsorption efficiency of ions in sewage and broadening spectral domain of catalytic reaction under the action of light source.

### SUMMARY OF THE INVENTION

Embodiment of the invention mainly aims at solving the present technical problem of low efficiency of sewage metal pollution processing existing in the prior art, and provides a sewage processing method and system; the method and the system use quantum carbon magnetic medium as magnetic adsorption material to absorb various kinds of metal ions in liquid rapidly and adsorb them into three-dimensional paramagnetic metal chain net under action of strong magnetic field. The quantum carbon magnetic medium can be taken out and recycled by mechanical transmission of the metal chain net.

Embodiment of the invention also aims to solve the present technical problem of low efficiency of organic pollution processing in the prior art, and provides a sewage processing method and system; the method and the system use the quantum carbon photoreaction medium as the photoreaction medium, which can produce a large amount of strongly active oxidation substances with irradiation from light source, so that organic or inorganic substances can be more thoroughly oxidized decomposition to produce non-hazardous substances.

The technical problems related to the invention are mainly solved by the following technical solutions:
A sewage processing method, comprising: step of ion processing, quantum carbon magnetic medium being added to sewage and mixed, separating the quantum carbon magnetic medium with adsorbed metal ions from the sewage by strong magnetic field, wherein the quantum carbon magnetic medium is quantum carbon mixture with superparamagnetic property.

Preferably, said sewage processing method includes:
feeding liquid mixed with the quantum carbon magnetic medium into a magnetic separation tank placed in a magnetic field region, adsorbing the quantum carbon magnetic medium with adsorbed metal ions onto a rotatable metal chain net and taking it out; sucking out and recycling the quantum carbon magnetic medium in the metal chain net by an air-blowing trumpet.

A sewage processing system comprising:
a magnetic separation tank, located in a magnetic field region, for receiving sewage mixed with the quantum carbon magnetic medium, wherein the magnetic separation tank is provided with a metal chain net which can be moved from a side of liquid to be processed to a side of a magnetic medium extraction mechanism.

Preferably, in said sewage processing system, the magnetic medium extracting mechanism is air-blowing trumpets respectively arranged on both sides of the metal chain net, wherein the air-blowing trumpet on one side is of positive pressure and the air-blowing trumpet on the other side is of negative pressure.

Preferably, in said sewage processing system, the metal chain net is a metal net with three-dimensional space, made from paramagnetic metal.

A sewage processing method comprising:
step of organic decomposition, quantum carbon photoreaction medium being added to the sewage and mixed, and performing dissolved oxygen reaction and photoreaction on mixed liquid; wherein the quantum carbon photoreaction medium is mixture of photoreaction media containing quantum carbon.

Preferably, in said sewage processing method, in the dissolved oxygen reaction, the mixed liquid is passed through metal plates with through-holes arranged sequentially and a plurality of cavities with different diameters; wherein the through-holes of each metal plate are misaligned.

A sewage processing system, comprising: a housing, wherein an end cover with a middle hole is set on both end of the housing; a metal plate A, a metal plate B and a metal plate C arranged sequentially from liquid inlet to outlet within the housing, wherein evenly distributed through-holes with same shape and same distribution are set on the metal plate A and the metal plate B in stagger mode; several through-holes are set on edge of the metal plate C with same interval along the circumferential part.

A sewage processing method comprising:
step of ion processing, quantum carbon magnetic medium being added to sewage and mixed, separating the quantum carbon magnetic medium with adsorbed metal ions from the sewage by strong magnetic field, wherein the quantum carbon magnetic medium is quantum carbon mixture with superparamagnetic property;
step of organic decomposition, quantum carbon photoreaction medium being added to liquid processed after the step of ion processing and mixed, and performing dissolved oxygen reaction and photoreaction on mixed liquid; wherein the quantum carbon photoreaction medium is mixture of photoreaction medium containing quantum carbon.

A sewage processing system, comprising an ion processing device and an organic decomposition device, wherein:
the ion processing apparatus includes a magnetic separation tank located in a magnetic field region, for receiving sewage mixed with a quantum carbon magnetic medium, the magnetic separation tank is provided with a metal chain net which can be moved from a side of liquid to be processed to a position between two air-blowing trumpets set oppositely and with positive and negative pressures respectively; the magnetic separation tank is provided with an overflow port;
the organic substance decomposition device comprises: an photoreaction medium mixing tank for mixing quantum carbon photoreaction medium; a dissolved oxygen micro-bubble generator, connected with the photoreaction medium mixing tank, wherein a metal plate array and a plurality of cavities with different diameters are arranged within the dissolved oxygen micro-bubble generator; and a photoreactor with a ultraviolet light source, connected with the dissolved oxygen micro-bubble generator; wherein the metal plate array includes several metal plates with through-holes, and the through-holes of each metal plate are misaligned.

Therefore, the present invention has the following advantages:
1. The magnetic adsorption medium and the quantum carbon photoreaction medium provided by an embodiment of the invention can be combined with a sewage purification system to separate and decompose heavy metals and organic pollutants in the water effectively and specially.
2. According to an embodiment of the invention, a metal paramagnetic chain net extracting mechanism is set in a magnetic field. The paramagnetic chain net is magnetized in a high gradient magnetic field, absorbs magnetic substances in water, and the absorbed substances is lifted to an air compression mechanism through a metal paramagnetic chain net for separation. Thus, the magnetic separation effect is achieved and significantly improved, and cost of magnetic separation is reduced.
3. The quantum carbon photoreaction medium of an embodiment of the invention participates in the reaction of the photoreactor with a specific size and gravity, and carries out solid-liquid separation by a natural precipitation method, thereby significantly improving photoreaction effect. The cost of magneto-photoreaction can be reduced by recycling the quantum carbon photoreaction medium through the circulatory system.

### DESCRIPTION OF THE FIGURES

Fig.1 is a schematic diagram of the sewage processing process.
Fig.2-1 is a schematic diagram of the heavy metal processing portion of the sewage processing system;
Fig.2-2 is a schematic diagram of the organic substance processing portion of the sewage processing system;
Fig.3 is a schematic diagram of structure of the magnetic separation system;
Fig.4-1 is a front view of the shape of the superconducting magnet;
Fig.4-2 is a top view of the shape of the superconducting magnet;
Fig.5 is a magnetic seed recycle and reuse system;
Fig.6-1 is a front view of 3D paramagnetic metal chain net;
Fig.6-2 is a side view of 3D paramagnetic metal chain net;
Fig.7 is a schematic diagram of an air-blowing trumpet of a magnetic medium extraction mechanism;
Fig.8-1 is a detailed diagram of an air-blowing trumpet of a magnetic medium extraction mechanism;
Fig.8-2 is a bottom view of Fig.8-1;
Fig.8-3 is a left view of Fig.8-1;
Fig.9 is a schematic diagram of structure of the dissolved oxygen micro-bubble generator;
Fig.10-1 is a schematic diagram of structure of the metal plate A1 of the dissolved oxygen micro-bubble generator;
Fig.10-2 is a side view of Fig.10-1;
Fig.10-3 is a schematic diagram of structure of the metal plate B1 of the dissolved oxygen micro-bubble generator;
Fig.10-4 is a side view of Fig.10-3;
Fig.10-5 is a schematic diagram of structure of the metal plate A2 of the dissolved oxygen micro-bubble generator;
Fig.10-6 is a side view of Fig.10-5;
Fig.10-7 is a schematic diagram of the structure of the metal plate B2 of the dissolved oxygen micro-bubble generator;
Fig.10-8 is a side view of Fig.10-7;
Fig.10-9 is a schematic diagram of the structure of the metal plate C of the dissolved oxygen micro-bubble generator;

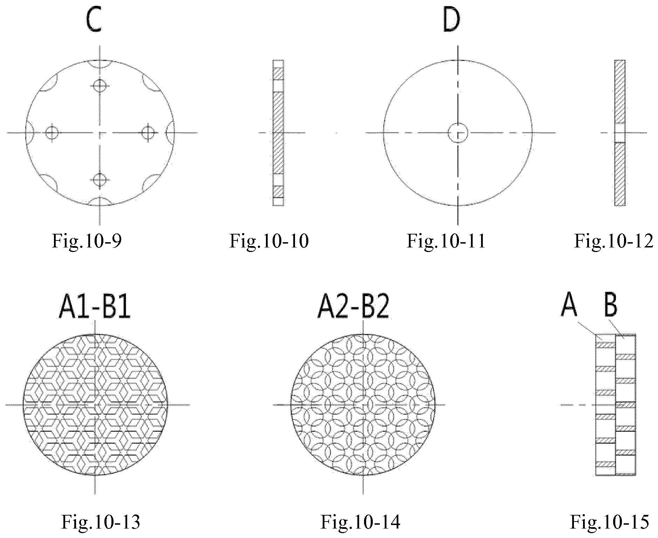

Fig.10-10 is a side view of Fig.10-9;

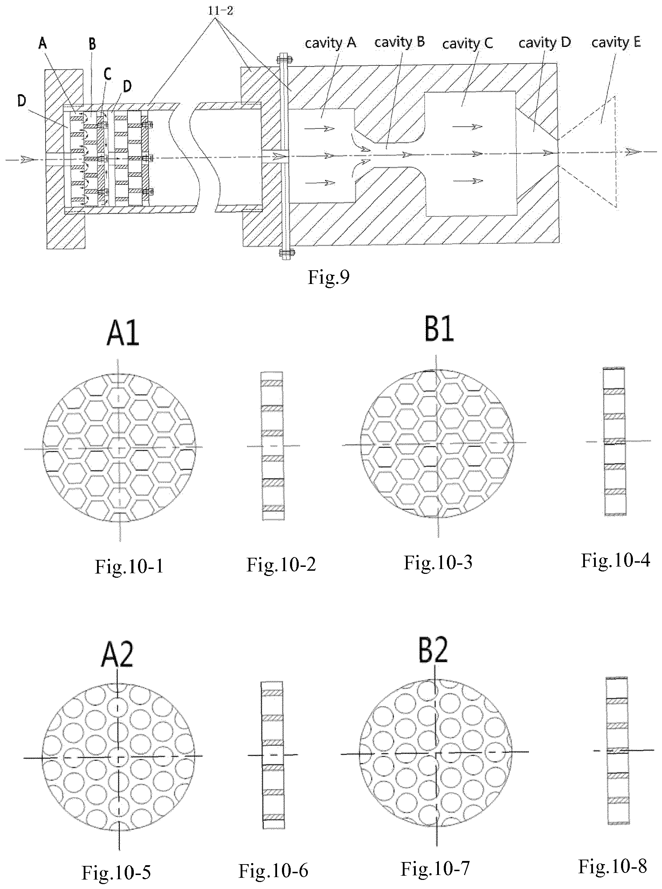

Fig.10-11 is a schematic diagram of the structure of the metal plate D of the dissolved oxygen micro-bubble generator;
Fig.10-12 is a side view of Fig.10-11;
Fig.10-13 is a schematic diagram of the superposition structure of the metal plates A1 and B1 of the dissolved oxygen micro-bubble generator;
Fig.10-14 is a schematic diagram of the superposition structure of the metal plates A2 and B2 of the dissolved oxygen micro-bubble generator;
Fig.10-15 is a schematic diagram of the superposition of metal plates A and B of the dissolved oxygen micro-bubble generator;

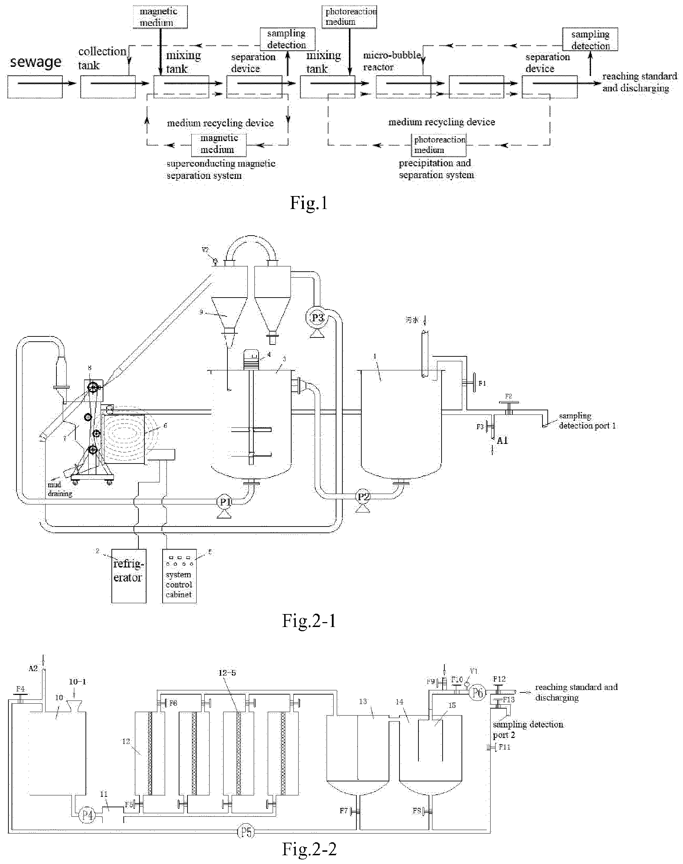

Fig.1 1 is a schematic diagram of the structure of each combined metal plate of the dissolved oxygen micro-bubble generator;

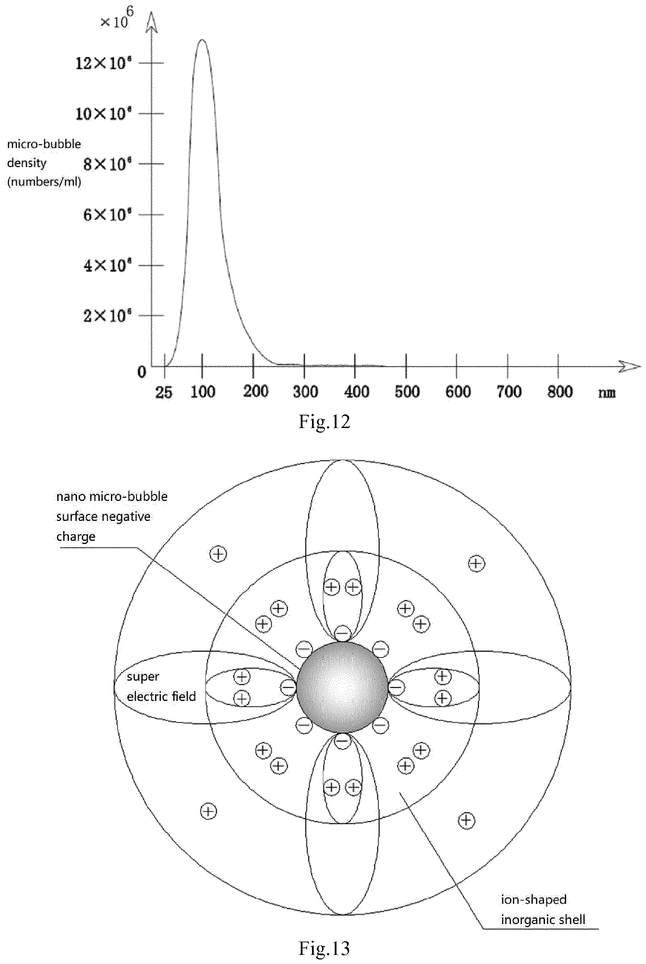

Fig.12 is a schematic diagram showing size and density of micro-bubble.
Fig.13 shows morphology of micro-bubble ions.

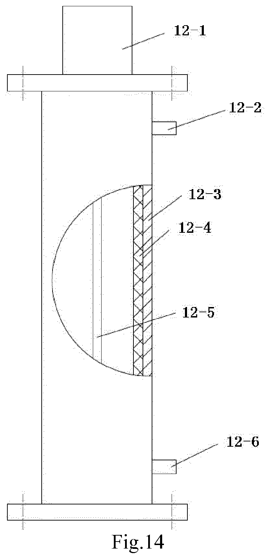

Fig.14 is a schematic diagram of structure of the photoreactor structure;

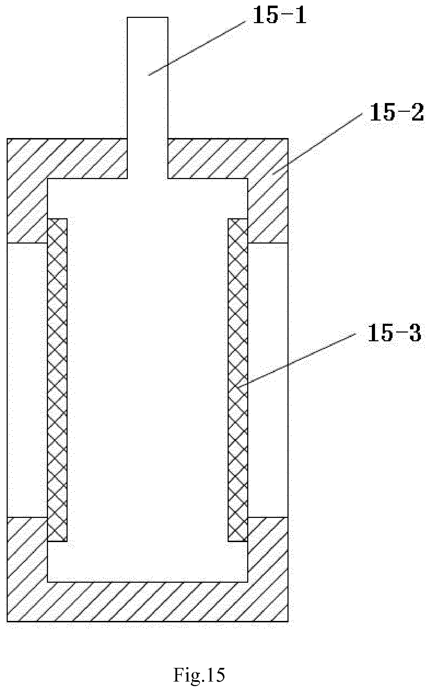

Fig.15 is a schematic diagram of structure of a metal fiber sintered felt filter;

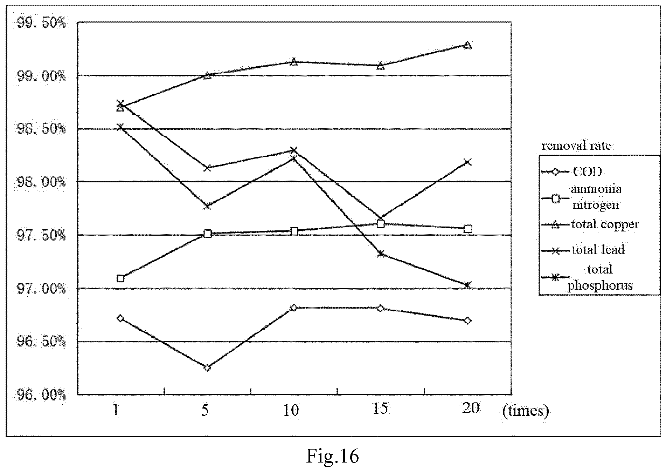

Fig.16 shows processing effect of waste water and statistical data of medium circulation of electroplating organic ink factory;

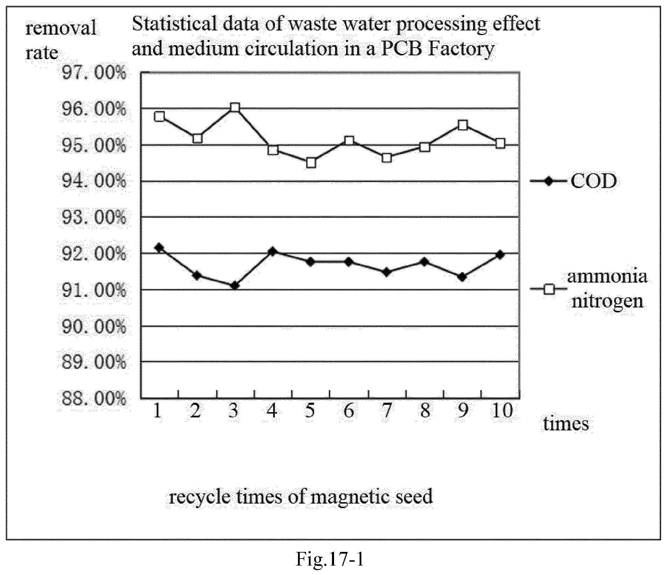

Fig.17-1 shows a schematic diagram 1 of processing effect of waste water in a printed circuit board factory.

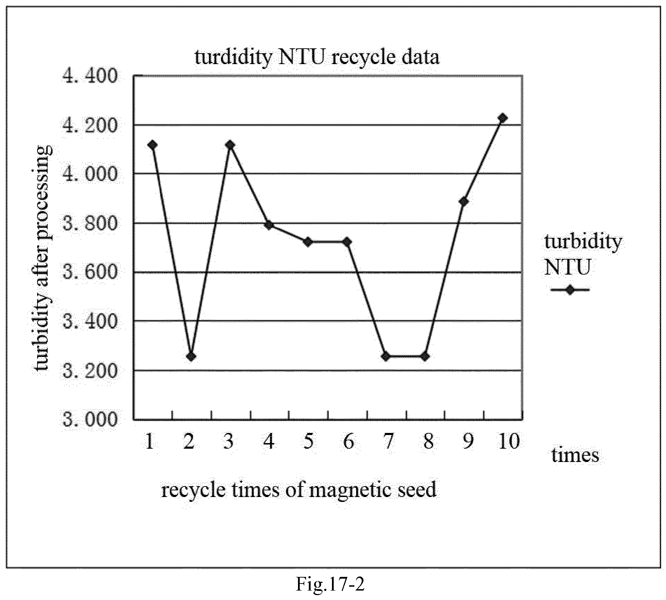

Fig.17-2 shows a schematic diagram 2 of processing effect of waste water in the printed circuit board factory.

### DETAILED DESCRIPTION OF THE INVENTION

Technical solutions of embodiments of the invention will be further explained in details below through embodiments and combined with the accompanying figures.

Numerals in the figures are listed as following: sewage collection tank 1, refrigerator control cabinet 2, mixing tank 3, stirring system 4, system control cabinet 5, superconductor 6, freezer 6-1, magnetic field region 6-2, magnetic field center 6-3, superconducting bulk 6-4, current terminal 6-5, refrigerant inlet 6-6, refrigerant outlet 6-7, vacuum outlet 6-8, temperature monitoring 6-9, magnetic separation tank 7, overflow port 7-1, magnetic medium extraction mechanism 8, drive wheel 8-1, slave wheel 8-2, tension wheel 8-3, air inlet 8-4, air outlet 8-5, three-dimensional paramagnetic metal chain net 8-6, air passage 8-7, fixed plate 8-8, trumpet 8-9, magnetic medium collection system 9, first cyclone solid-gas separator 9-1, second cyclone solid-gas separator 9-2, air duct 9-3, quantum carbon photoreaction medium mixing tank 10, quantum carbon photoreaction medium delivery port 10-1, dissolved oxygen micro-bubble generator 11, positioning bolt 11-1, dissolved oxygen micro-bubble generator housing 11-2, photoreactor 12, light source end cover 12-1, outlet 12-2, metal outer cylinder 12-3, reflective layer 12-4, light source 12-5, inlet 12-6, primary sedimentation basin 13, secondary sedimentation basin 14, water purification filter 15, water purification outlet 15-1, water purification device housing 15-2, filter 15-3, feed pump P1, sewage pump P2, air pressure pump P3, photoreaction pressure pump P4, recycle pump P5, water discharge pump P6, primary return valve F1, primary sampling valve F2, intake valve F3, recycle valve F4, photoreaction inlet valve F5, photoreaction outlet valve F6, quantum carbon photoreaction medium recycle valve F7, quantum carbon photoreaction medium secondary recycle valve F8, recoil cleaning valve F9, recoil stop valve F10, secondary return valve F11, discharge valve F12, secondary sampling valve F13, pressure recoil gauge VI, negative pressure gauge V2.

### 1. Process and system structure of sewage processing

Fig.1 shows a process of sewage processing according to an embodiment, which uses a sewage purification system comprising a sewage collection tank, a mixing tank, a superconducting magnetic separation system, and a photo-catalytic reaction device connected in turn, as well as a magnetic medium recycling device for recycle and reuse of superconducting magnetic medium, and a quantum carbon photoreaction medium recycling device.

The sewage purification system of the present embodiment is a system composed of heavy metal processing and organic substance processing, and implements a method for treating heavy metals and organic pollutants in sewage respectively. In particular, in the method combined two processings, the magnetic adsorption medium and the quantum carbon photoreaction medium provided by embodiments of the invention cooperate with a sewage purification system to separate and decompose heavy metals and organic pollutants in the water effectively and specially.

The superconducting magnetic separation mechanism used in the sewage purification system of embodiments of the invention comprises a superconducting magnet, which can be removed and replaced with a low-temperature superconducting magnet or a high-temperature superconducting magnet. The superconducting magnet provides a predetermined high gradient magnetic field inside the superconducting separation device. A metal paramagnetic chain net extracting mechanism is arranged in the magnetic field, the paramagnetic chain net is magnetized in a high gradient magnetic field to adsorb magnetic substances in water. The magnetic material which is absorbed is lifted to the air pressure mechanism through the metal paramagnetic chain net to separate, thus achieving the effect of magnetic separation. The magnetic material is a quantum carbon magnetic medium provided by embodiments of the present invention.

The photoreaction processing mechanism used in the sewage purification system of an embodiment of the invention comprises one or more groups of photoreactors. The quantum carbon photoreaction medium participates in the reaction of the photoreactor with a specific size and specific gravity. The solid-liquid separation is carried out by natural precipitation method, and the quantum carbon photoreaction medium is recycled through the circulatory system. The quantum carbon photoreaction medium is prepared by the quantum carbon photoreaction medium of an embodiment of the present invention. The water is treated by magnetic separation and photoreaction process, then is filtered through high-precision metal fiber sintered felt filter to get the clean water up to the standard.

Figs.2-1 and 2-2 are schematic diagrams of system structure of an alternative embodiment of a sewage processing system according to this embodiment, wherein the A1 port in Fig.2-1 is connected to the A2 port in Fig.2-2.

The heavy metal processing part is shown in Fig.2-1, which includes: a sewage collection tank 1, bottom of which is connected to a mixing tank 3 by sewage pump P2; the mixing tank 3, which is provided with a stirring device 4 for stirring inner part thereof, and the bottom of the mixing tank 3 is connected with a magnetic separation tank 7 through the feed pump P1; a magnetic medium extraction mechanism 8 which is arranged on the magnetic separation tank 7, wherein the magnetic medium extraction mechanism 8 is connected with a magnetic medium collection system 9, and recycle port of the magnetic medium collection system 9 is connected with the mixing tank 3. The magnetic medium collecting system 9 comprises two oppositely arranged air-blowing trumpets connected to the air pressure pump P3. The two trumpets are arranged opposite each other on both sides of the three-dimensional paramagnetic metal chain net 8-6. One of the trumpets is used for generating positive pressure and the other is used for generating negative pressure, thus the magnetic medium can be removed from the three-dimensional paramagnetic metal chain net 8-6. The magnetic separation tank 7 is located within the magnetic field range of the superconductor 6, which is connected to the refrigerator 2 and the system control cabinet 5.

Fig.2-2 shows an organic processing part, comprising: a quantum carbon photoreaction medium mixing tank 10, connected with an overflow port above the magnetic separation tank 7, wherein a bottom of the quantum carbon photoreaction medium mixing medium tank 10 is connected with the dissolved oxygen micro-bubble generator 11 through a photoreaction pressure pump P4; the dissolved oxygen micro-bubble generator 11, which is connected to a photoreactor 12, a primary sedimentation basin 13, a secondary sedimentation basin 14, and a water purification filter 15 in turn.

Bottom of the primary sedimentation basin 13 and the secondary sedimentation basin 14 is connected with the quantum carbon photoreaction medium mixing tank 10 through a recycle pump P5 and a recycle valve F4.

According to the embodiment, it is provided with a sampling detection port on a pipe connected to an overflow port above the magnetic separation tank 7. The pipe is connected to the sewage collection tank 1 through the primary return valve F1, connected to the sampling detection port through the primary sampling valve F2, and connected to the quantum carbon photoreaction medium mixing tank 10 through the inlet valve F3.

The sewage processing process of this embodiment will be described in details as below. In this embodiment, corresponding ion processing steps and organic decomposition steps are adopted for heavy metal processing and organic substance processing respectively, as described below.

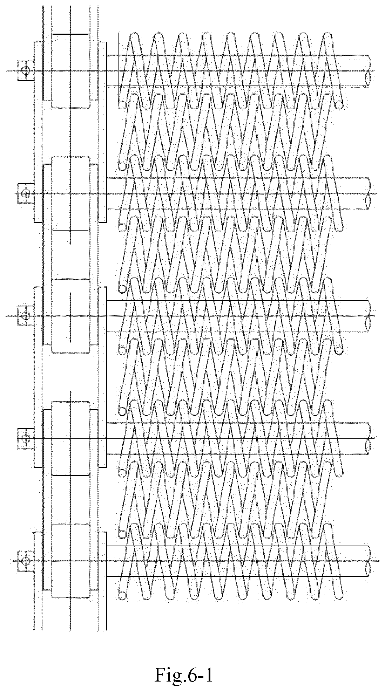

The ion processing step comprises the following sub-steps:
step 1, After sewage enters the sewage collection tank 1, the sewage enters the mixing tank 3 quantitatively by the sewage pump P2, and a magnetic medium delivery port is arranged above the mixing tank 3; the quantum carbon magnetic medium is provided quantitatively by the delivery port below the first cyclone solid-gas separator 9-1 according to concentration requirement, and is fully mixed under stirring by the stirring system 4;
step 2, mixed homogeneous liquid is transported directly to the magnetic separation tank 7 through pipe by the feed pump P1;
step 3, the magnetic separation tank 7 is connected with the superconducting magnet 6, which provides magnetic field with strength of 0.5T-5T inside the magnetic separation tank 7. The magnetic separation tank 7 is provided with a flow guide plate designed according to fluid and magnetic field properties of the mixed liquid from the inlet. The guide plate can be a 45° plate arranged below inlet of the mixed liquid. Lower half of the metal chain net in the magnetic medium extraction mechanism 8 is placed in liquid in the magnetic separation tank 7. Directional route of flow of the mixed liquid through the flow guide plate is as follows: first passing through the metal chain net in the magnetic medium extraction mechanism 8; magnetic substance of the mixed liquid being absorbed into the three-dimensional paramagnetic metal chain net as shown in Fig.6-1 under adsorption of strong magnetic field and being transported to the magnetic medium recycling and reuse system for recycling and reuse. Non-magnetic large particles in the mixed liquid precipitate to lower part of the magnetic separation tank 7, and sediment is regularly removed (mud draining), clean object after magnetic separation of the mixed liquid is continuously overflow discharged through the overflow port above the magnetic separation tank. The superconductor is connected with the refrigeration control cabinet 2. The strong magnetic field is keeping under control. The system control cabinet 5 controls the system.

In this embodiment, the organic decomposition step specifically comprises the following sub-steps:
step 1, the water after magnetic separation flows out through the overflow port of the magnetic separation tank 7, and the heavy metal indexes are sampled and detected at the sampling detection port 1 by valve F2, and the water body which is not up to standard will be returned to the sewage collection tank 1 through valve F1 for reprocessing. After sampling and reaching the standard, the valves F1 and F2 are closed and F3 are turn on into the photoreaction system.
step 2, water body passes through the valve F3, enters into the quantum carbon photoreaction medium mixing tank 10, above which a quantum carbon photoreaction medium delivery port above the quantum carbon photoreaction medium mixing tank 10. The quantum carbon photoreaction medium is put into the quantum carbon photoreaction medium quantitatively according to the concentration requirement. After fully mixed in the mixing tank, the mixed liquid is applied with a certain dynamic pressure by the pump P4; after sufficient dissolved oxygen reaction through dissolved oxygen micro-bubble generator 11, it enters into the photoreactor 12 via the valve F5. The photoreactor 12 consists of at least one groups. The mixed liquid after the reaction by the photoreactor enters into the primary sedimentation basin 13 through the valve F6.
step 3, the primary sedimentation basin 13 carries on the precipitation type solid-liquid separation, whereby the quantum carbon photoreaction medium precipitates to bottom of the primary sedimentation basin 13, separated water overflows to the secondary sedimentation basin 14. Precipitated quantum carbon photoreaction medium is transformed to liquid slurry state at the bottom. The quantum carbon photoreaction medium slurry is returned to the quantum carbon photoreaction medium mixing tank 10 via valve F7, pump P5 and valve F4 to be mixed for mixing, recycling and reuse.
step 4, residual carbon photoreaction medium in the water is further precipitated and separated in a secondary mixing tank. Quantum carbon photoreaction medium slurry at the bottom is returned to the quantum carbon photoreaction medium mixing tank 10 through the valve F8, the pump P5 and the valve F4 for mixing, recycling and reuse. Supernatant from the secondary mixing tank passes through a water purifying filter 15, a valve F10, a pressure gauge V1 and a pump P6 to get clean water. The water is sampled and tested via the valve F13 at a sampling detection port 2, and the water up to the standard is discharged directly through the valve F13. The substandard water not up to the standard passes through valve F11, pump P5 and valve F4 and returns back to quantum carbon photoreaction medium mixing tank 10 for reprocessing.

### 2. Magnetic separation and magnetic medium recycle

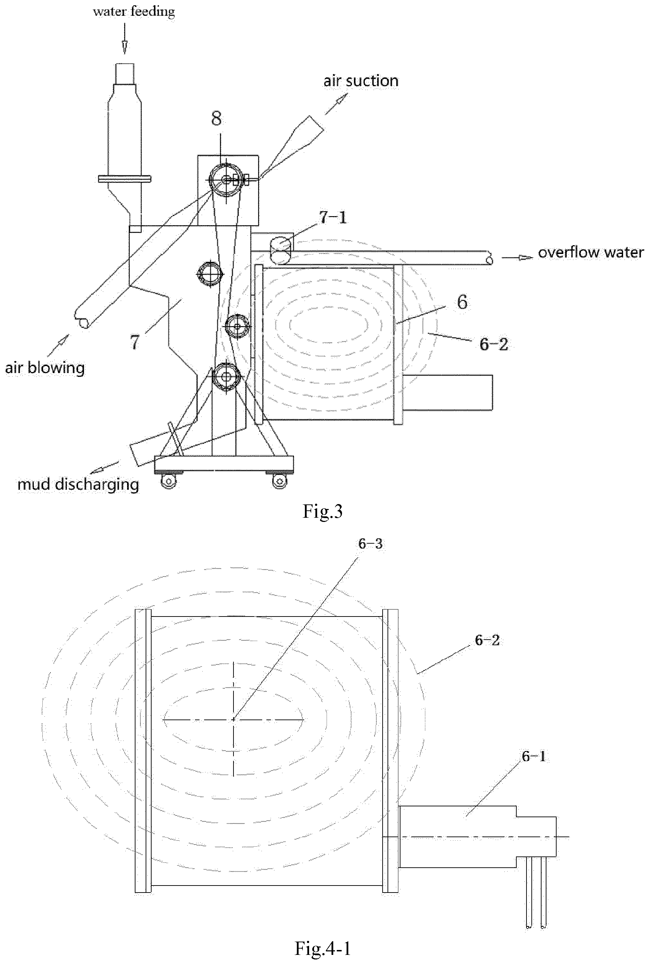

As shown in Fig.3, the magnetic separation system is composed of a superconducting magnet 6, a magnetic separation tank 7, a magnetic medium extraction mechanism 8, and adsorption mechanism. The superconducting magnet 6 can be either a high temperature superconducting magnet or a low temperature superconducting magnet.

The magnetic separation tank 7 comprises a magnetic separation tank body, on which a liquid inlet, an overflow port and a mud discharge port are provided, wherein the overflow port is preferably arranged at the top position of the magnetic separation tank body.

The liquid inlet and overflow port 7-1 are arranged on each side of the metal chain net respectively, and the magnetic separation tank 7 is provided with a multi-staged inward indentation structure on one side of the liquid inlet, and outer walls of each stage are parallel to each other. Each stage is provided with a section with variable diameter with an inclination of 45°.

The liquid to be processed enters the magnetic separation tank from the inlet to inner side of the magnetic separation tank for processing, the processed liquid is discharged from the overflow port, and precipitated impurity in the liquid is discharged from mud discharge port at the bottom. A metal chain net is arranged inside the magnetic separation tank. One end of the metal chain net is strangled with a slave wheel inside the magnetic separation tank, the other end thereof extends to the magnetic medium extraction mechanism 8 and hinges with a roller inside the magnetic separation tank. Middle part of the magnetic separation tank is provided with several tension wheels connected with the metal chain net.

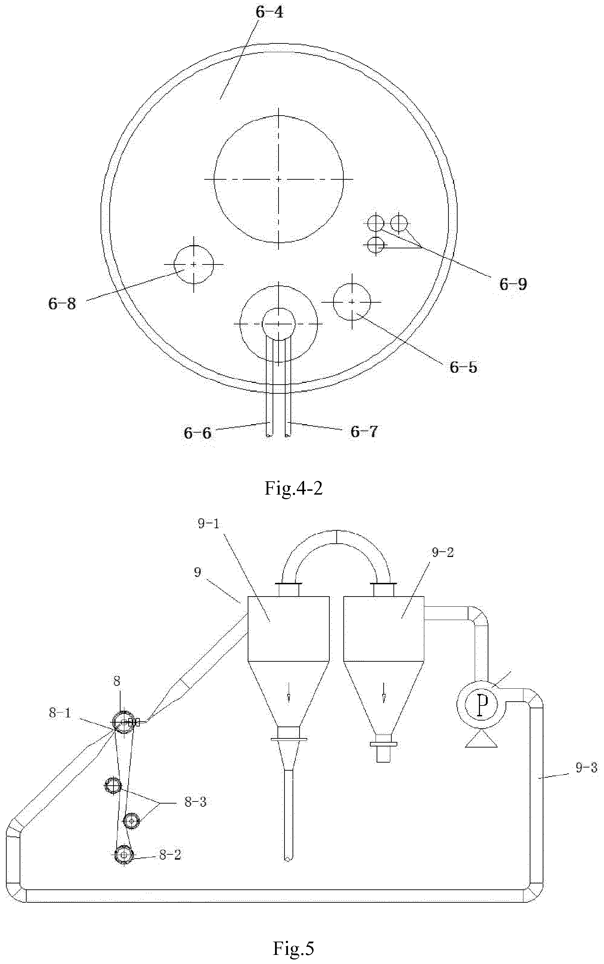

The magnetic separation tank is located in the magnetic field provided by the superconducting magnet 6, the shape of which is shown in Figs. 4-1 and 4-2, which comprises a superconducting body, inside which a vacuum outlet and a current terminal a refrigerant inlet and a refrigerant outlet are arranged. Shape and size of superconducting magnet can be designed according to requirements of magnetic separation system. The superconducting magnet can be high-temperature superconducting magnet or low-temperature superconducting magnet. Central magnetic field intensity is 2T to 5T, and refrigerant in freezer is liquid helium or liquid nitrogen. As an example, a low-temperature superconducting magnet is adopted with liquid helium as refrigerant, current of 114A is conducted to the superconducting body via a current terminal, temperature monitoring control is of 4K, vacuum exhaust is of 10-6hPa and center of the magnetic field is of 2T, to provide a high gradient magnetic field for the magnetic separation system.

The magnetic medium extracting mechanism 8 and the magnetic medium recycling device are shown in Fig.5. The magnetic medium extracting mechanism 8 is internally provided with a driving wheel, one end of the metal chain net is hinged on the driving wheel. The magnetic medium extraction mechanism 8 is provided with two air-blowing trumpets oppositely arranged. The metal chain net is located between the two air blowing trumpets, one of which is connected with the positive pressure end of the air pump P3, the other end is connected with several solid-gas separators in turn and connected with negative load pressure of the air pump P3. In this embodiment, preferably, two cyclone solid-gas separators are connected.

With above structure, the air-blowing trumpet and the air pump P3 provide circulating air pressure power, and positive pressure air is sent through the air pipe to the air-blowing trumpet, and magnetic substance adsorbed on the three-dimensional paramagnetic metal chain net is separated out by air-blowing, while the negative pressure is generated in the pipe at the other end of the air pump P3, for absorbing the magnetic substance on the three-dimensional paramagnetic metal chain net under negative pressure.

The cyclone solid-gas separator performs solid-gas separation two times to achieve purpose of recovering magnetic substances. Quantum carbon magnetic medium collected by the cyclone solid-gas separator can quantitatively provide magnetic medium to the mixing tank 3 according to system requirement. As an non-limiting example, preferably, the air pump P can be an air pump with air volume of 8.0m³/min, static pressure of 16KPa and power of 88KW. As an air pipe, static pressure can be generated in range of 10KPa-30KPa.

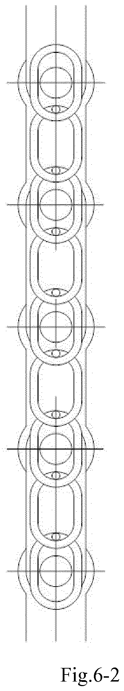

Metal chain nets in this embodiment are shown in Figs.6-1 and 6-2. The metal chain net is a three-dimensional metal net made of paramagnetic metal, which is called three-dimensional paramagnetic metal chain net, which comprises a plurality of horizontal axes, ends of adjacent horizontal axes are connected through chain rings, a chain net surface is arranged on the horizontal axis, and is formed by chain wire twining in three-dimensional space in a wavy shape. When in use, the three-dimensional metal net is magnetized in a high-gradient magnetic field, and magnetic substance in the mixed liquid is adsorbed into the three-dimensional space of the metal chain net, whereby motion of the chain net carries the magnetic substance together to the magnetic medium extraction mechanism 8. In principle, any type of paramagnetic metals can be used, and the three-dimensional geometric space of the metal chain net can also be structured in a variety of ways. As an example, preferably, the paramagnetic metal can be SUS316, the three-dimensional net can be Ø2 helical tube winded with SUS316 steel wire, wherein diameter and pitch of the helical tube are 15mm and 6mm respectively, Ø2 steel wires can be connected between helical tubes.

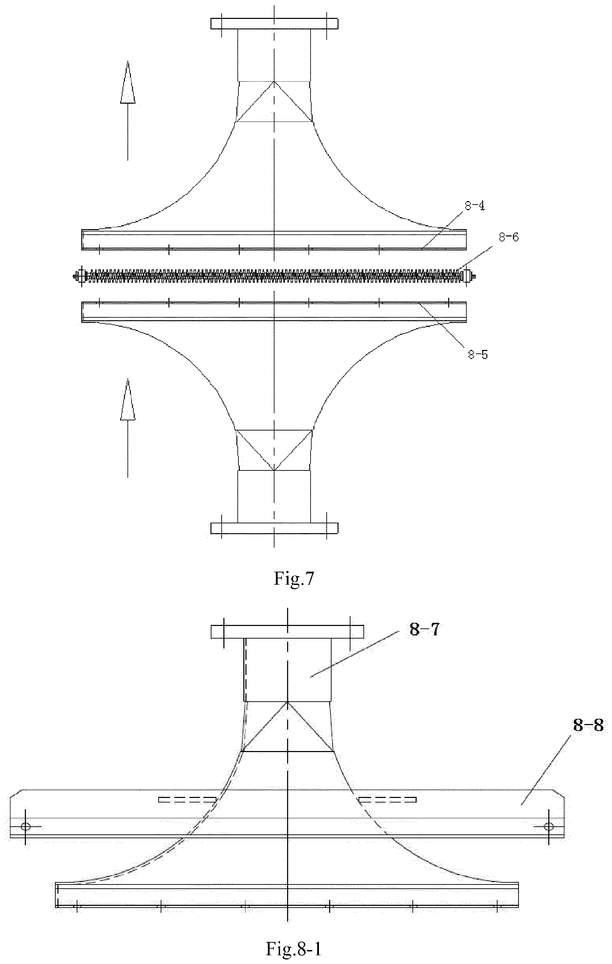

The air-blowing trumpet of this embodiment is shown in Fig.7, and is composed of a pair of opposite trumpet air outlet and air inlet with same geometric size. There is a three dimensional paramagnetic metal chain net of corresponding width in the middle of the air outlets. The static pressure of air outlet is equal to that of air inlet, but the air outlet is of positive pressure, and the air inlet is of negative pressure, so as to form function of absorption and separation of magnetic substance in the three-dimensional paramagnetic metal chain net. Geometric dimensions and azimuths of the air outlets, 3D paramagnetic metal chain net and the air inlet can be adjusted as required. As an example, distance between the air-air outlet and the air inlet is 30 mm, and the 3D paramagnetic metal chain net is placed in the middle therebetween.

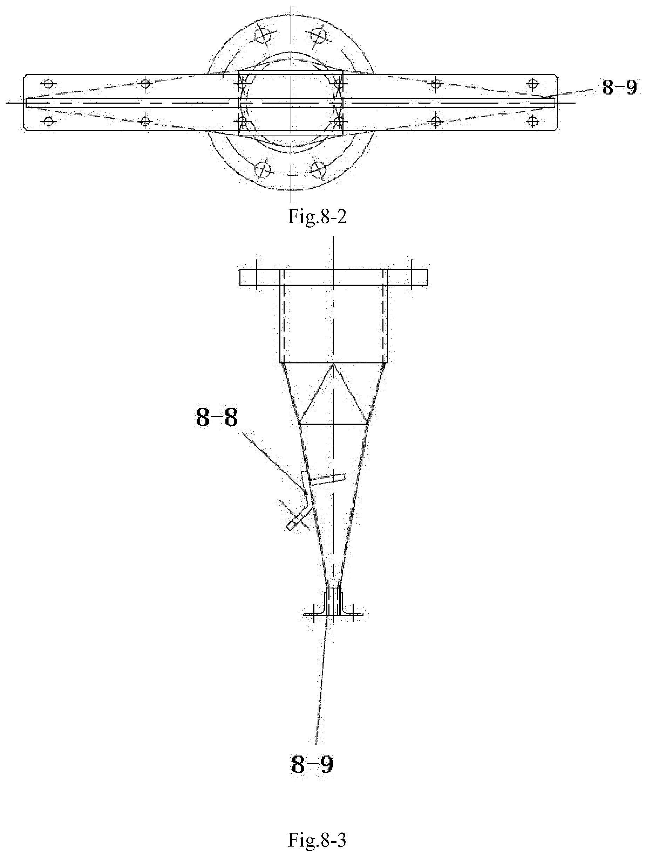

Figs.8-1 to 8-3 are detailed diagrams of the trumpets of the present embodiment, which mainly includes an air pipe, trumpet ports, and a fixed plate. Geometric dimensions of the trumpet ports for blowing and inhaling are same and can be adjusted appropriately. As an example, it is found that preferable option is that when aerostatic pressure is 16KPa, optimum geometric size for the trumpet ports for blowing and inhaling is 7mm×600mm with material of SUS304.

### 3. Decomposition of organic substance and recycle of quantum carbon photoreaction Medium

Part for the decomposition of organic substance mainly includes a quantum carbon photoreaction medium mixing tank, a dissolved oxygen micro-bubble generator, a photoreactor and so on which will be described below, wherein the quantum carbon photoreaction medium mixing tank is mainly used for mixing of sewage and quantum carbon photoreaction medium.

### 1) Dissolved oxygen micro-bubble generator

Liquid after magnetic separation flows out of the overflow port of the magnetic separation tank 7 and enters the quantum carbon photoreaction medium mixing tank 10, then enters the dissolved oxygen micro-bubble generator 11 through the photoreaction pressure pump P4.

The dissolved oxygen micro-bubble generator 11 is shown in Fig.9 and includes a micro-bubble cavity and a multi-diameter cavity.

A plurality of dissolved oxygen reaction units are arranged in the micro-bubble cavity, and each dissolved oxygen reaction unit comprises a plurality of metal plates with through-holes.

Shape of the metal plate is shown in Figs.10-1 to 10-15, wherein plates A1 and B1 are metal plates with uniformly arranged hexagonal through-holes, which are of same size and different arrangement on the plates A1 and B1, and when plates A1 and B1 are overlapped, center of each hexagonal through-holes on plate A1 is nearest external intersection point of three adjacent hexagonal through-holes on plate B1, in which A1-B1 shows condition after overlapped.

Plates A2 and B2 are metal plates with uniformly arranged circular through-holes, which are of same size and different arrangement on the plates A2 and B2, and when plates A2 and B2 are overlapped, center of each circular through-holes on plate A2 is nearest external intersection point of three adjacent circular through-holes on plate B2. That is, distance between the center of each circular hole on A2 and each of centers of three adjacent circular holes in B2 is same, in which A1-B1 shows condition after overlapped.

Plate C is a metal plate with a plurality of arc through-holes on outer circle part, and there are five limit bolt holes in the middle thereof.

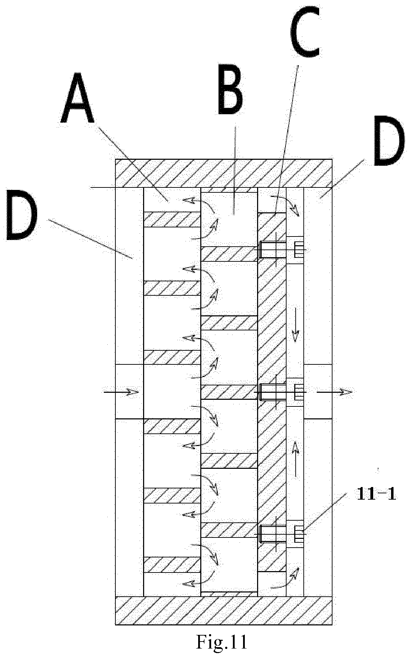

Plate D is a metal plate with a through-hole in the middle. When the plates A1 and D are overlapped, the hexagonal through-holes in the plate A1 form a space for miniature reactor. The plates A2, B1, B2 have same effect. Fig.11 is a schematic diagram of dissolved oxygen micro-bubble generator, which is composed of combination of plates A, B, C and D so as to form a micro reactor. Each micro reactor is connected with adjacent reactor, so as to form multiplex micro reactor with continuous flow of liquid medium in different space, pressure, temperature, jet and other conditions to participate in the reaction.

The dissolved oxygen micro-bubble generator as shown in Fig.9 is composed of one or more units, wherein liquid medium passes through a micro-bubble cavity and enters a multi-diameter cavity. Cavities A, B, C, D and E are set in the multi-diameter cavity. Diameters of each cavity are different and suddenly changed. The liquid medium takes part in the reaction under different velocity of flow and different positive and negative pressures. The dissolved oxygen in the liquid medium produces a large amount of ionized particles in an intense stretching and compressing state.

For example, unit reactor devices at front end of dissolved oxygen micro-bubble generator are preferably composed of 3 to 5 groups of unit reactor devices. Proportional sizes of tube diameters of cavities A, B, C, D, and E can be chosen as required, wherein cavity D is a conical cavity, with taper of 1:1 and diameter of opening, the cavity E is an opening cavity, with inlet diameter equal to outlet diameter of the cavity D, tube diameter of the cavity E ≥ tube diameter of the cavity D. Optimal ratio of tube diameters for each cavities is 3:1.5:4:1:1. The inlet of dissolved oxygen micro-bubble generator is applied with 3-5kg/cm² pressure by pump P4.

With above structure, when the quantum carbon photoreaction medium and liquid for water processing pass through the dissolved oxygen micro-bubble generator as shown in Fig.9, a large amount of dissolved oxygen micro-bubbles in the liquid are produced in the multiple micro reactor at front end of the generator. Fig.12 is a frequency diagram of micro-bubble size and density obtained by experiment, wherein vertical axis is in order of magnitude of 10⁶. Result of this example shows that the diameter with maximum frequency is 100nm, diameter width of frequency peak is about 20 nm (50% of particles) with about 1.2 billion particles/cm³, and the diameter with minimum frequency is about 25nm. After the reaction of a large amount of dissolved oxygen micro-bubbles at back end of the generator, surface of liquid medium and surface of dissolved oxygen micro-bubble produce a form of micro-bubble ions. Figure 13 shows the state of ionic electric field by establishing the model of micro-bubble ion morphology.

### 2) Principle and structure of photoreactor

Fig.14 shows structure of the photoreactor according to an embodiment of the present invention, which is composed of a metal outer cylinder, a reflective layer, a lamp tube, a light source end cover, an inlet and an outlet. The lamp tube is arranged inside the metal outer cylinder, a reflective layer is arranged between the lamp tube and the outer cylinder, a liquid inlet is arranged at the lower end of the metal outer cylinder, and an outlet is arranged at the upper end thereof.

Liquid that passes through the dissolved oxygen micro-bubble generator carries a large amount of dissolved oxygen ions and adheres to surface layer of the quantum carbon photoreaction medium and enters the photoreactor through the entrance of the photoreactor to carry out the reaction. This phenomenon forms a synergistic relationship between ultraviolet light, quantum carbon photoreaction medium, dissolved oxygen micro-bubbles and water, which is beneficial to improve the photocatalytic reaction efficiency, and can improve rate for quantum carbon photoreaction medium decomposition to produce hydroxyl radical and other strong oxidant, and removal rate of organic substance oxidation. There are many types of photoreactive substance in quantum carbon photoreaction medium including TIO₂, ZnO, CdS, WO₃, SnO₂ and so on. Under irradiation of light source with 200nm to 400nm wavelength, photoreactive substance produces a large amount of strongly active oxidants, such as OH⁻, O₂, H, and other strong oxidant, which can oxidize and decompose almost all organic substance or some inorganic substance thoroughly, to generate non-harmful substances such as H₂O and CO₂. For example, the photoreactors in the system according to the embodiment of the invention form at least one group, preferably four groups. The medium is a granular quantum carbon photoreaction medium prepared by an embodiment of the invention, with particle diameter of 10µm to 100µm, preferably 30µm to 60µm, and input amount thereof in the water to be processed is 0.1% to 1.2% (mass ratio, preferably 0.5% to 1%). Preferably, the light source is a 6-8w ultraviolet lamp with main wavelength of is 315nm to 400nm, and light intensity of 1mW/cm². Preferably, the tank body is made of SUS316. A reflective layer is set inside the tank, and can adopt material with reflective function, preferably acrylic mercury-plated reflective products, and can be attached to inner side of the tank. Mixed liquid is exported from the outlet at flow rate of 30L/min.

### 3) Principle and structure of water purification filter

Liquid after photoreaction enters a primary sedimentation basin 13 and a secondary sedimentation basin 14. A water purifying filter 15 is arranged in the secondary sedimentation basin 14. Structure of the water purifying filter 15 is shown in Fig.15, and includes a housing, on which a filter hole with a filter body is arranged, wherein a water purification outlet is arranged inside the housing. Water which is precipitated twice is then purified by the water purifying filter. The housing can preferably be a metal housing made of SUS316. Filter screen can be any high-precision filters, preferably a metal fiber sintered felt filter, with filtration precision of 3 to 10µm. Quality of water passing through the water purification filter can meet the standard requirements.

### 4. Preparation and activation of magnetic medium

A preparation method and an activation method of a quantum carbon magnetic medium liquid solution used in magnetic separation of the embodiment will be described below.

### 1) Preparation method of magnetic medium

Methods for preparing a quantum carbon magnetic medium are shown in the following two embodiments.

### Embodiment 1:

(1) H₁₂Cl₃FeO₆ and FeC₁₂·4H₂O with a mass ratio of 2.8 to 3.2:1 is dissolved in ionic water, in which weight of solute per 100ml of ionic water can be 6.5g to 7.5g.
(2) the solution from step (1) is heated in water bath and stirred continuously for heating, during which Nitrogen gas is added for protection, after heating up to 40 to 60°C, the solution is dripped with concentrated ammonia water until pH value becomes about 9, with temperature stable and reaction time more than 1 hour.
(3) After reaction, the liquid in a flask is transferred into a beaker and precipitated;
(4) Supernatant of the mixture after static precipitation is removed and washed with deionized water for three times until pH value of the washing solution becomes about 7 to obtain nano ferroferric oxide.
(5) Water at bottom of the beaker is absorbed by magnets, drained and then added with the deionized water and the quantum carbon solution, wherein deionized water, nano ferroferric oxide and quantum carbon solution is of ratio of 100ml:(3-3.6mg):(60-70ml);
(6) Shell activated carbon is added to the mixture from step (5), while stirring with rotate speed of 400 to 600r/min and stirring time of 20 to 60 minutes, in which 1.9 to 2.1g shell activated carbon is added to the mixture solution per 100ml;
(7) A magnet absorbs at the bottom of the beaker, then draining the water and drying by a heating oven;
(8) Dried medium is roasted and activated in anaerobic atmosphere of a muffle furnace, and then cooled;
(9) Cooled product is grinded into the 80µm to 120µm, to obtain quantum carbon magnetic medium, wherein H₁₂Cl₃FeO₆ is ferric chloride hexahydrate.

### Embodiment 2:

(1) 25.3g of H₁₂Cl₃FeO₆ and 8.6g of FeC₁₂·4H₂O are dissolved in a beaker with 500ml deionized water and transferred to three-necked flask after complete dissolved.
(2) The three-neck flask is heated in a water bath while stirring continuously, during which nitrogen gas is added for protection.
(3) Concentrated ammonia water is added when temperature becomes 60 °C with PH value controlled to about 9;
(4) Temperature is keeping stable with reaction time of 1 hour;
(5) Liquid in the bottle is transferred into a beaker, precipitated in a static manner.
(6) Supernatant is removed, deionized water is added for washing by three times with PH value controlled to about 7 to get 9.8g of nano ferroferric oxide;
(7) 3000Gs permanent magnet is used to adsorb at the bottom of the beaker, and then the water is drained and then added with 300ml deionized water.
(8) 200ml of quantum carbon liquid is added into the reaction, while stirring with rotation speed of 500r/min and stirring time of 30 minutes;
(9) 9.8g of shell activated carbon is added into the reaction while stirring at 500r/min with stirring time of 30 minutes.
(10) 3000Gs permanent magnet is adsorbed at the bottom of beaker, the water is drained then dried in an electric oven at 100°C.
(11) Dried medium is roasted and activated in anaerobic atmosphere of a muffle furnace at 550°C for 4 hours, and cooled naturally.
(12) Cooled product is grinded into the 80µm to 120µm, to obtain quantum carbon magnetic medium of an embodiment of the present invention.

The shell activated carbon is the plant carbon of walnut housing texture with particle diameter of 50µm to 100µm, iodine value≥1200 mg/g, strength≥95%.

In the present embodiment, the quantum carbon liquid is aqueous solution containing quantum carbon, the quantum carbon liquid is with ORP of 280mv to 380mv, conductivity σ of 1 to 5ms/cm, electromotive force of 280mv to 380mv, pH value of 1.5 to 3.2, and solute concentration of 0.1% to 0.45%. The quantum carbon liquid solute is composed of carbon particles (referred to as quantum carbon particles) of oxidized mono-layer graphene and multi-layer graphene (≤10 layers), mass fraction ratio of mono-layer graphene to multilayer graphene is 2 to 4:8 to 6.The graphene is periodic honeycomb two-dimensional carbon material formed by sp2 hybridized carbon atoms arranged in hexagons. The mono-layer graphene has a thickness of 0.335nm. There are many oxygen-containing groups on surface of the oxidized quantum carbon particles, such as hydroxyl, carbonyl and carboxyl groups. The oxygen content of the quantum carbon particles is 40% to 60% of mass fraction.

For waste water processing, especially for metal ions in water, it is difficult to remove heavy metal ions effectively by biological and chemical methods. Therefore, adsorption method is one of the most effective methods to remove heavy metal ions at present, because the surface of quantum carbon particles is rich in highly active oxygen-containing functional groups, the quantum carbon particles have good water-solubility and labile chemical activity, and can interact with metal ions.

Carboxyl and carbonyl groups and randomly distributed hydroxyl and epoxy groups are distributed on surface of quantum carbon particles. A large amount of hydroxyl and carboxyl groups on the surface increase negative electrical density of the quantum carbon surface, strengthen the strong complexation and electrostatic interaction with metal ions, and promote the adsorption of metal ions. The existence of a large amount of functional groups provides a wealth of adsorption sites for quantum carbon particles, and its structural characteristics make quantum carbon solution a high performance adsorption material.

Through the preparation of the quantum carbon magnetic medium according to the present embodiment, the quantum carbon magnetic medium has characteristics of superparamagnetism. In the sewage, the quantum carbon magnetic medium rapidly adsorbs various metal ions in the liquid, then is adsorbed into a three-dimensional paramagnetic metal chain net (Fig. 6-1) under the action of the strong magnetic field, and the quantum carbon magnetic medium carrying adsorbed pollutants including metal ions is mechanically transmitted to the air-blowing and suction trumpets through the metal chain net.

### 2) Magnetic medium activation method

During the quantum carbon magnetic medium is being reused, adsorption capacity will decrease because adsorption tends to saturation. In detection on the sampling detection port 1 in device system of an embodiment of the invention, before any index for processing water approaches to the standard line, the quantum carbon magnetic medium is to be completely recycled, and need to be replaced with new medium. The recycled quantum carbon magnetic medium is processed with activation. Process for the activation is as follows:
(1) The recycled quantum carbon magnetic medium and deionized water with ratio of 1:3 are placed in an ultrasonic vessel and processed with ultrasonic wave at 25 kHz for 1 hour while stirring.
(2) Water is filtered and added with new deionized water of same amount, processed with ultrasonic wave while stirring for 1 hour;
   steps (1) and (2) are repeated for 3 times, then draining and drying in an oven at 100 °C;
(3) Dry medium is roasted and activated at 550°C in a muffle furnace for 4 hours, then cooled naturally.
(4) Cooled product is grinded and sieved between 80µm-120µm.

The quantum carbon magnetic medium activated by the above method can still retain more than 95% adsorption activity.

### 5. Preparation and Activation methods of Quantum carbon photoreaction medium

The method for preparation method and activation of quantum carbon photoreaction medium used in the process of decomposition of organic substance in this embodiment are described as follows.

### 1) Method for preparing quantum carbon photoreaction medium.

### Embodiment 1

According to the present embodiment, a method for preparing quantum carbon photoreaction medium includes:
(1) Quantum carbon solution, TiO₂, high purity water and proper amount of N(CH₃)₄OH·5H₂O are mixed, stirred and heated to prepare slurry, in which ratio of quantum carbon solution to TiO₂ is 100ml:200g, and the slurry is dried and solidified in an oven to obtain Rh-C/TiO₂ product.
(2) Rh-C/TiO₂ product, dry zeolite powder and H₃PtCl₆·5.3H₂O containing 1% Pt by weight are mixed to prepare slurry.
(3) Rh-Pt-C-M/TiO₂ composite photo-catalytic oxidation is prepared by drying, solidifying and calcining the slurry from step (2); after cooling, the product is ground to 200 mesh to 300 mesh, which is the photoreaction medium.

### Embodiment 2

According to the present embodiment, a method for preparing a quantum carbon photoreaction medium is as follows:
(1) 50g of TiO₂ and 50g of zeolite(M) are dispersed into a beaker containing high purity water of 200ml respectively; water is removed by stirring at room temperature for several minutes (non-metallic rotors are used for stirring); above step is repeated for three times;
(2) Product is dried in vacuum drying oven at 80 °C, ready for use. 25ml quantum carbon solution, 50g of dried TiO₂ powder, and Rh(NO₃)₃ with 5% Rh metal by weight are respectively weighed and taken;
(3) The quantum carbon solution, TiO₂, 350ml of high purity water and N(CH₃)₄OH·5H₂O is mixed and heated in a three-necked flask, to prepare slurry at 60°C (a small amount of Rh(NO₃)₃ is slowly added to the flask each time during stirring while keeping at 60°C for 1 hour);
(4) The slurry is put into an oven, dried and solidified at 100°C for 12 hours to obtain Rh-C/TiO₂ product;
(5) The Rh-C/TiO₂ product, 50g of dry zeolite powder and H₃PtCl₆·5.3H₂O containing 1% Pt metal by weight is added to the three-necked flask respectively to prepare slurry (a small amount of H₃PtCl₆·5.3H₂O is slowly added to the flask each time during the stirring for 1 hour and standing for 6 hours);
(6)The slurry is put into an oven, dried and solidified at 100°C for 12 hours, then put into an electric oven without oxygen at 380°C for 6 hours, the Rh-Pt-C-M/TiO₂ composite photo-catalytic oxidation is obtained. The product which is ground to between 200 mesh and 300 mesh in an agate cone or a glass cone after cooling is the quantum carbon photoreaction medium of an embodiment of the present invention.

The TiO₂ of an embodiment of the invention is TiO₂ nano TiO₂P25(commercial product) based on gas phase method, anatase with average particle diameter of 25nm, and TiO₂ of mixed phase of crystal rutile. The zeolite (M) in the embodiment is mordenite pulverized to 300 mesh.

N(CH₃)₄OH·5H₂O is tetramethylammonium hydroxide pentahydrate, H₃PtCl₆·5.3H₂O is chloroplatinic acid hydrate.

### 2) Activation method of Quantum Carbon photochemical reaction medium

The quantum carbon photoreaction medium prepared by an embodiment of the invention can keep catalytic oxidation ability and activity degree for a long time in repeated use, and its attenuation is slow. However, with the detection at the sampling detection port 2 in the device system of an embodiment of the invention, before any index of the treated water approaches the standard line, the quantum carbon photoreaction medium need to be completely recycled, and need to be replaced with new medium. The recycled quantum carbon photoreaction medium is treated with activation. Process for the activation is as follows:
(1) The recycled quantum carbon photoreaction medium and deionized water with ratio of 1:3 are placed in an ultrasonic vessel and processed with ultrasonic wave at 25 kHz for 1 hour while stirring.
(2) Water is filtered and added with new deionized water of same amount, processed with ultrasonic wave while stirring for 1 hour;
(3) steps (1) and (2) are repeated for 3 times, then draining and drying in an oven at 100 °C;
(4) The dried medium is calcined for 4 hours in a muffle furnace without oxygen at 380°C;
(5) product is ground and sieved to between 200 and 300 mesh after cooling.

The activated quantum carbon photoreaction medium can still keep more than 95% catalytic oxidation activity after the above mentioned methods are used.

### 6. Effect of implementation

According to the scheme of an embodiment of the invention, the implementation effect of embodiments of the invention is analyzed and verified by two engineering examples. The details are as follows.

### Example 1

An electroplating organic ink factory produces wastewater of 300t per day, the waste water produced by each unit of production line is subjected to central collection and unified processing. The indicators of inflow water quality and processing effect are shown in the following table:

**Table 1 Statistical data on processing effect and medium circulation of waste water from the Electroplating Organic Ink Factory**

| No. | Item | Emission limit GB21900-2008 | Original value of Electropla ting Organic Ink Waste water | Processing effect and number of cycles | | | | |
|---|---|---|---|---|---|---|---|---|
| | | | | 1st time | 5th time | 10th time | 15th time | 20th time |
| 1 | Chemical oxygen demand (CoDcr,mg/ L) | 80.00 | 1076.00 | 35.36 | 40.35 | 34.28 | 34.35 | 35.6 |
| | | | removal rate | 96.71 % | 96.25 % | 96.81 % | 96.81 % | 96.69 % |
| 2 | ammonia nitrogen (mg/L) | 15.00 | 215.00 | 6.25 | 5.35 | 5.30 | 5.15 | 5.25 |
| | | | removal rate | 97.09 % | 97.51 % | 97.53 % | 97.60 % | 97.56 % |
| 3 | total copper (mg/L) | 0.50 | 11.20 | 0.146 | 0.112 | 0.098 | 0.102 | 0.080 |
| | | | removal rate | 98.70 % | 99.00 % | 99.13 % | 99.09 % | 99.29 % |
| 4 | total lead (mg/L) | 0.20 | 3.63 | 0.046 | 0.068 | 0.062 | 0.085 | 0.066 |
| | | | removal rate | 98.73 % | 98.13 % | 98.29 % | 97.66 % | 98.18 % |
| 5 | total phosphorus (mg/L) | 1.00 | 0.672 | 0.010 | 0.015 | 0.012 | 0.018 | 0.02 |
| | | | removal rate | 98.51 % | 97.77 % | 98.21 % | 97.32 % | 97.02 % |
| 6 | pH value | 6 to 9 | 8.68 | 8.73 | 8.82 | 8.81 | 8.85 | 8.72 |
| 7 | Temperature (°C) | | 20.00 | 15.00 | 13.00 | 12.20 | 13.00 | 12.45 |

The indicators are compared as shown in Fig.16, and implementation options are as follows:
The waste water from the factory enters the polluted water purification equipment system of an embodiment of the present invention. Release quantity of quantum carbon magnetic medium is 1.2% of sewage (weight ratio), release quantity of quantum carbon photoreaction medium is 1.5% of sewage (weight ratio); superconducting magnet is cryogenic superconducting magnet (Figs.4-1 and 4-2 shows shape of the superconducting magnet), refrigerant is liquid helium. The current terminal transmits current of 114A to the superconducting magnet body, temperature monitoring control is 4K, vacuum exhaust gas is 10-6hPa, and magnetic field center is 2T, which provides a high gradient magnetic field for the magnetic separation system. All the other parts of the equipment system are processed according to preferable parameters of the embodiments of the invention. Results of the processing are fully up to standard. The removal rate of heavy metals is more than 96%, and some of them are close to 100%. According to the statistic data of processing effect and medium circulation, after 20 times of repeated processing of waste water by quantum carbon magnetic medium and quantum carbon photoreaction medium, removal rate of CODcr is still 96% to 97%, removal rate of ammonia nitrogen remains between 97% and 98%, removal rate of total copper remains between 98% and 99%; removal rate of total lead remains between 97% and 99%, and removal rate of total phosphorus remains between 97% and 99%, pH values remains between 6 and 9. It shows that the quantum carbon magnetic medium and the quantum carbon photoreaction medium still have a high synergistic activity in collaborative use, after 20 times of reuse.

### Example 2

The experiment of reuse of waste water in a printed circuit board factory shows that the waste water of the plant is 30t/day, and the waste water produced by each unit of the production line is collected centrally and treated in a unified manner. The statistical data of influent quality and processing effect are shown in the table below, and the statistical data of waste water processing effect and medium circulation in a PCB factory are shown in the table below:

**Table 2 Statistical data of waste water processing effect and medium circulation in a PCB Factory**

| No. | Item | Integrated sewage discharge standard I (GB8978 -1996) | Raw water value of printing waste water | 1 (times) | 2 | 3 | 4 | 5 | 6 | 7 | 8 | 9 | 10 |
|---|---|---|---|---|---|---|---|---|---|---|---|---|---|
| 1 | Chemical oxygen demand (CoDcr, mg/L) | 100.00 | 525.2 0 | 41. 27 | 45.29 | 46.79 | 41.80 | 43.31 | 43.3 1 | 44.81 | 43.31 | 45.52 | 42.30 |
| | | | removal rate | 92.14 % | 91.38% | 91.09% | 92.04% | 91.75% | 91.75% | 91.47% | 91.75% | 91.33% | 91.95% |
| 2 | ammonia nitrogen (mg/L) | 15.00 | 3.768 | 0.159 | 0.182 | 0.150 | 0.194 | 0.207 | 0.184 | 0.202 | 0.191 | 0.168 | 0.187 |
| | | | removal rate | 95.78 % | 95.17% | 96.02% | 94.85% | 94.51% | 95.12% | 94.64% | 94.93% | 95.54% | 95.04% |
| 3 | pH 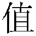 | 6--9 | 9.19 | 7.66 | 7.54 | 7.48 | 7.44 | 7.45 | 7.41 | 7.39 | 7.40 | 7.33 | 7.21 |
| 4 | Temperature (°C) | | 28.8 | 25.5 | 25.4 | 25.4 | 25.7 | 25.4 | 25.4 | 25.2 | 25.4 | 25.4 | 25.7 |
| 5 | turbidity(NTU) | 50.00 | 133.000 | 4.115 | 3.255 | 4.115 | 3.790 | 3.720 | 3.720 | 3.255 | 3.255 | 3.885 | 4.225 |

Comparison of effect is shown in Figs. 17-1 and 17-2. The specific implementation methods are as follows:
The waste water from the factory enters the polluted water purification equipment system of an embodiment of the present invention. Release quantity of the quantum carbon magnetic medium is 1.0% of the sewage (weight ratio), release quantity of the quantum carbon photoreaction medium is 1.2% of the sewage (weight ratio); the other parts of the apparatus system are treated according to the preferred parameters of an embodiment of the present invention. The results of processing are up to the standard, especially for the improvement of COD and ammonia nitrogen and other indicators, it has a significant effect. According to the statistical data of processing effect and medium circulation, after 10 times of repeated processing of waste water by quantum carbon magnetic medium and quantum carbon photochemical reaction medium, the removal rate of CODcr is kept between 91% and 93%, removal rate of ammonia nitrogen remains between 94% and 97%, turbidity kept between 3.2-4.4, pH value is stable between 6-9. It shows that the quantum carbon magnetic medium and the quantum carbon photoreaction medium still have a high synergistic activity in collaborative use, after 10 times of reuse.

The sewage of an embodiment of the invention includes, but is not limited to sewage discharged from various factories, such as electroplating plants, printing plants, chemical plants, electronic industry factories, paper mills, food factories, etc, also includes urban sewage and sewage discharged from daily life. Also includes river water, surface water, groundwater and so on. The waste water can be centrally purified through a waste water processing plant.

The pollutants in the sewage of the invention include a plurality of heavy metal ions, such as chromatin (Cr), arsenic (As), cadmium (Cd), zinc (Zn), nickel (Ni), mercury (Hg), lead (Pb), etc. It also includes organic substance, substances leading to increases in COD (chemical oxygen demand), BOD(biological oxygen demand) and TOC (total organic carbon) indices. These substances are examples only, but not limited to this, but also include special chemical structures such as bacteria, viruses, and so on.

The specific embodiments described herein are merely illustrations of the spirit of the present invention. Technical personnel in the technical field of the present invention may make various modifications or additions to the described specific embodiments or substitute in a similar manner. However, it does not deviate from the spirit of the present invention or go beyond the scope defined in the appended claim.

## Claims

1. A sewage processing method, comprising:
step of ion processing, quantum carbon magnetic medium being added to sewage and mixed, separating the quantum carbon magnetic medium with adsorbed metal ions from the sewage by strong magnetic field, wherein the quantum carbon magnetic medium is quantum carbon mixture with superparamagnetic property.

2. The sewage processing method as in Claim 1, comprising:
feeding liquid mixed with the quantum carbon magnetic medium into a magnetic separation tank placed in a magnetic field region, adsorbing the quantum carbon magnetic medium with adsorbed metal ions onto a rotatable metal chain net and taking it out; sucking out and recycling the quantum carbon magnetic medium on the metal chain net by an air-blowing trumpet.

3. A sewage processing system comprising:
a magnetic separation tank, located in a magnetic field region, for receiving sewage mixed with the quantum carbon magnetic medium, wherein the magnetic separation tank is provided with a metal chain net which can be moved from a side of liquid to be processed to a side of a magnetic medium extraction mechanism.

4. The sewage processing system as in Claim 3, wherein the magnetic medium extracting mechanism is air-blowing trumpets respectively arranged on both sides of the metal chain net, wherein an air-blowing trumpet on one side is under positive pressure and another air-blowing trumpet on the other side is under negative pressure.

5. The sewage processing system as in Claim 3, wherein the metal chain net is a metal net with three-dimensional space, made from paramagnetic metal.

6. A sewage processing method, comprising:
step of organic decomposition, quantum carbon photoreaction medium being added to sewage and mixed, and performing dissolved oxygen reaction and photoreaction on mixed liquid; wherein the quantum carbon magnetic medium is quantum carbon mixture with superparamagnetic property.

7. The sewage processing method as in Claim 6, wherein in the dissolved oxygen reaction, the mixed liquid is passed through metal plates with through-holes arranged sequentially and several cavities with different diameters; wherein the through-holes of each metal plate are misaligned.

8. A sewage processing system, comprising: a housing, wherein an end cover with a middle hole is set on both end of the housing; a metal plate A, a metal plate B and a metal plate C arranged sequentially from liquid inlet to outlet within the housing, wherein evenly distributed through-holes with same shape and same distribution are set on the metal plate A and the metal plate B in stagger mode; several through-holes are set on edge of the metal plate C with same interval along circumferential part.

9. A sewage processing method comprising:
step of ion processing, quantum carbon magnetic medium being added to sewage and mixed, separating the quantum carbon magnetic medium with adsorbed metal ions from the sewage by strong magnetic field, wherein the quantum carbon magnetic medium is magnetized quantum carbon mixture; step of organic decomposition, quantum carbon photoreaction medium being added to liquid processed after the step of ion processing and mixed, and performing dissolved oxygen reaction and photoreaction on mixed liquid; wherein the quantum carbon photoreaction medium is mixture of photoreaction medium containing quantum carbon.

10. A sewage processing system, comprising an ion processing device and an organic decomposition device, wherein:
the ion processing apparatus includes a magnetic separation tank located in a magnetic field region, for receiving sewage mixed with a quantum carbon magnetic medium, wherein a metal chain net which can be moved from a side of liquid to be processed to a position between two air-blowing trumpets set oppositely and with positive and negative pressures respectively is set in the magnetic separation tank, an overflow port is set on the magnetic separation tank;
the organic substance decomposition device comprises: an photoreaction medium mixing tank for mixing quantum carbon photoreaction medium; a dissolved oxygen micro-bubble generator, connected with the photoreaction medium mixing tank, wherein a metal plate array and several cavities with different diameters are arranged within the dissolved oxygen micro-bubble generator; and a photoreactor with a ultraviolet light source, connected with the dissolved oxygen micro-bubble generator; wherein the metal plate array includes several metal plates with through-holes, and the through-holes of each metal plate are misaligned.
